# EUROPEAN PATENT APPLICATION

(11) **EP 1 193 981 A2**
(43) Date of publication of application: **03.04.2002**
(21) Application number: 01123864.9
(22) Date of filing: 28.08.1998
(51) Int. Cl.: H04N 7/56, H04N 7/52, H04N 5/928

(54) **Decoding method and recording medium carrying recorded decoding program**

(30) Priority: 05.09.1997 JP 24066997; 27.04.1998 JP 11676298
(62) Divisional of application: 98940625.1
(71) Applicant: MATSUSHITA ELECTRIC INDUSTRIAL CO., LTD., Kadoma-shi, Osaka 571-8501 (JP)
(72) Inventor: Ono, Tadashi, Kyoto 610-0352 (JP); Juri, Tatsuro, Osaka-shi, Osaka 534-0016 (JP)
(74) Representative: Grünecker, Kinkeldey, Stockmair & Schwanhäusser Anwaltssozietät

(57) **Abstract**

When coded video and audio signals are decoded by a computer, the computation amount required per unit time is enormous. Depending on the performance of a CPU, therefore, it is very difficult to perform the decoding in real time. With respect to an audio, when all data are not output in real time, a dull audio output is produced or sound skipping occurs.

In the decoding method, when a coded video or a coded audio is to be decoded by using a PC, a decoding end target time for realizing an audio real time reproduction is compared with an actual decoding end time in each of decoding units. If the actual decoding end time is later than the decoding end target time, a video decoding is temporarily interrupted, or the priority of the video decoding is lowered, thereby realizing an audio real time reproduction.

In the decoding method, when a coded video or a coded audio is to be decoded by using a PC, a scheduling method is provided to more efficiently perform a data input, an audio decoding, and a video decoding by using a buffer for at least three frames.

## Description

### Technical Field

The present invention relates to a method of decoding coded video and audio signals, and also to a recording medium on which a program of decoding the signals is recorded.

### Background Art

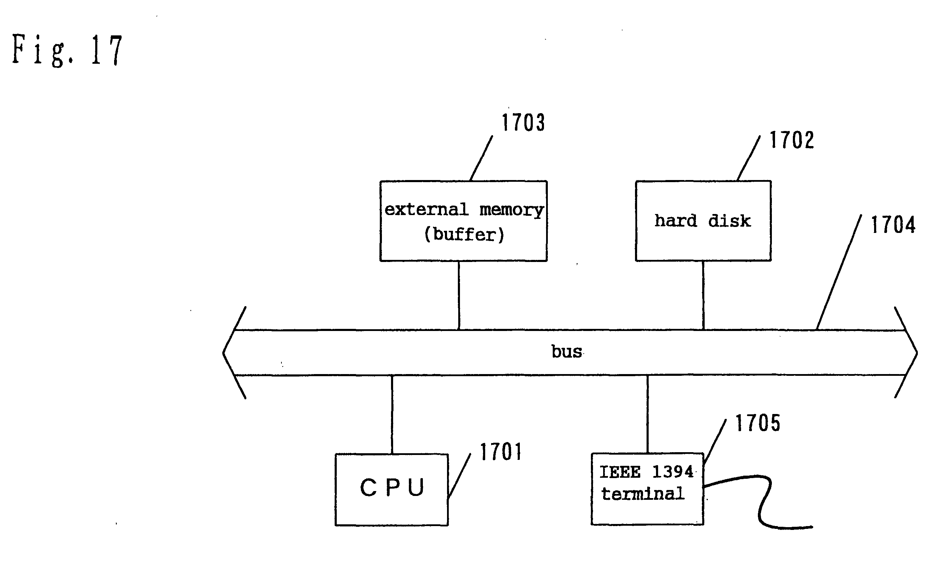

Fig. 17 is a view illustrating the configuration of a usual computer. In the usual configuration of a computer, a CPU 1701 serving as a calculating unit, a hard disk 1702 serving as a nonvolatile recording medium, and an external memory (buffer) 1703 serving as a volatile recording medium are connected to one another via a bus 1704.

An IEEE 1394 interface which allows digital video and audio data to be transmitted in real time is standardized. An IEEE 1394 terminal 1705 which is based on the standard will be commercially available in the near future.

Recently, as the performance of a personal computer (hereinafter, referred to as PC) are improved, video and audio processes become to be practically performed by software without using a dedicated apparatus.

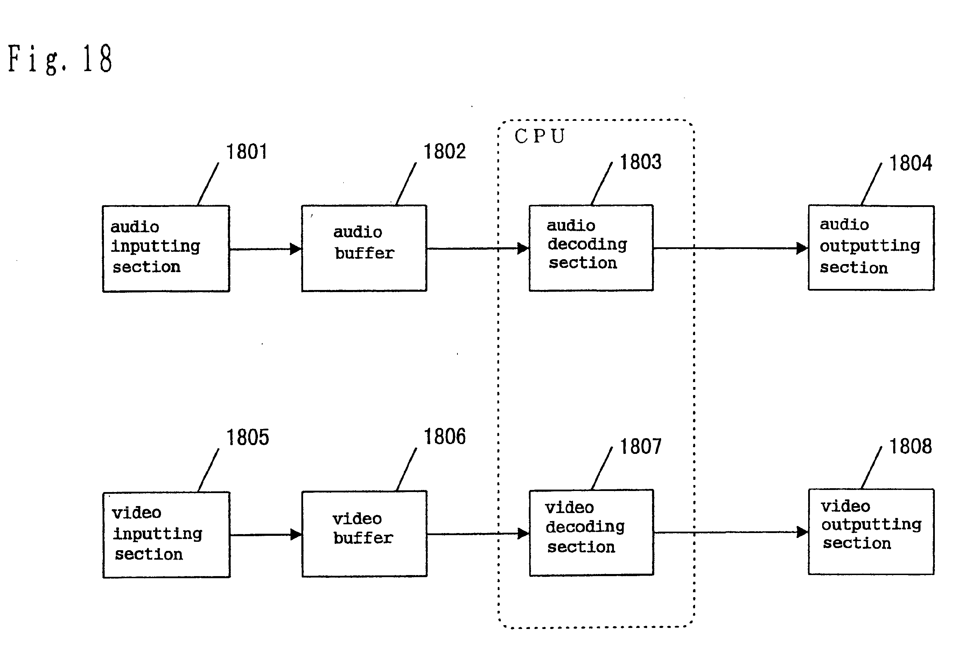

Fig. 18 is a block diagram of a method of decoding and reproducing a coded video and a coded audio in a PC by software.
A coded audio signal which is input from an audio inputting section 1801 is input into an audio buffer 1802 which holds a coded audio signal in a predetermined decoding unit (in this case, one frame of a video signal). The coded audio signal which is read out from the audio buffer 1802 is decoded by an audio decoding section 1803, and then output from an audio outputting section 1803.
Similarly, a coded video signal which is input from a video inputting section 1805 is input into a video buffer 1806 which holds a coded video signal in a unit of frame. The coded video signal which is read out from the video buffer 1806 is decoded by a video decoding section 1807, and then output from a video outputting section 1808.

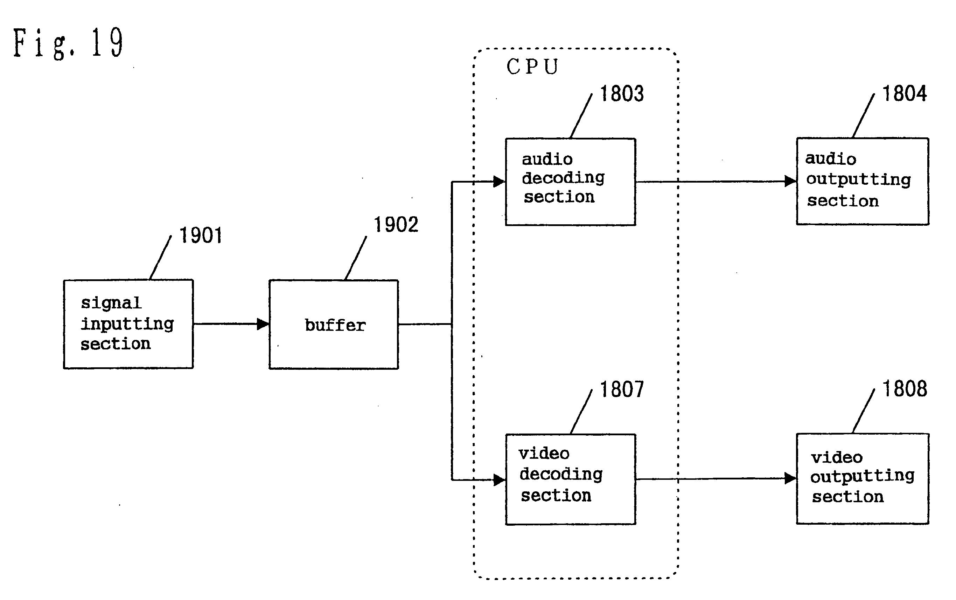

Fig. 19 is a block diagram of a decoding method by software in the case where a coded video and a coded audio are input as a multiplexed signal to a PC.
The multiplexed signal which is input from a signal inputting section 1901 is input into a buffer 1902 which holds a multiplexed signal in a unit of frame. The audio decoding section 1803 and the video decoding section 1807 extract the coded audio and the coded video from the multiplexed signal held by the buffer 1902 and decode them, respectively. The decoded audio and video are output from an audio outputting section 1804 and a video outputting section 1808, respectively. When, during a process of obtaining and decoding a coded signal (a coded audio signal, a coded video signal, or a multiplexed signal) of a certain frame, a coded signal of the next frame is input into the buffer, the decoding cannot be correctly performed. Therefore, a signal of the next frame cannot be input into the buffer unless the decoding is completed.
Each of the operations of the audio decoding section 1803 and the video decoding section 1807 is performed by a CPU in the PC on the basis of a programmed procedure. The CPU performs the audio decoding and the video decoding in a unit of thread serving as a basic process unit, and can perform only one of the audio decoding and the video decoding in one thread.

When video and audio are decoded in a PC by using the above-described conventional method, however, there arises the following problem.

The number of decoding processes which are to be performed in a PC is very large. Particularly, processing sections in the video decoding process is very larger in number than those in the audio decoding process. Depending on the performance of a CPU, therefore, it is impossible to decode all data of video and audio signals in real time (in the case of an NTSC signal, t = 1001/30 [msec.] or shorter). When all data of video and audio signals cannot be decoded in real time, the data are output with being appropriately decimated in a unit of frame in order to perform real time reproduction. When all data of an audio signal are not reproduced in real time, however, a dull output such as the case of a slow reproduction is obtained, or sound skipping occurs, with the result that a very unpleasant sound is reproduced. By contrast, with respect to a video signal, a visually significant interference is not produced even when decimation is performed on about one frame for each two or three frames. In a conventional technique, however, scheduling is not appropriately performed, so that there is a possibility that frame slips occur in a larger number. When a coded signal is input in real time as in the case of an IEEE 1394 interface, the next frame is input before the decoding process of a certain frame is ended. In the conventional technique, therefore, the buffer cannot be updated and a failure occurs.

In order to prevent such inconveniences from occurring, a method may be employed in which the number of buffers is increased in a unit of frame and input and output operations are performed in parallel. However, this method involves a problem in that the increased number of buffers causes also the production cost of a PC performing the process to be raised. When only the increase of the buffer number is conducted and the scheduling of processes is not performed, there is a possibility that a CPU enters an idling state.

### Disclosure of Invention

According to the invention, a decoding method and a decoding program are provided which are excellent in efficiency, which solve the problems of the conventional techniques, and in which the number of required buffers is reduced as far as possible, and scheduling of the data input and decoding in a unit of frame is performed, whereby an audio signal is reproduced in real time without being interrupted and the video output rate is raised.

The present invention of claim 1 is a decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is later than the decoding target time, the process of decoding the coded video signal in said video decoding means is temporarily interrupted.

The present invention of claim 2 is a decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is earlier than the decoding target time, the process of decoding the coded audio signal in said audio decoding means is temporarily interrupted, and, if the reference time is later than the decoding target time, the process of decoding the coded video signal in said video decoding means is temporarily interrupted.

The present invention of claim 3 is a decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is later than the decoding target time, priority setting means sets a priority of said video decoding means to be lower, or a priority of said audio decoding means to be higher.

The present invention of claim 4 is a decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is earlier than the decoding target time, priority setting means sets a priority of said video decoding means to be higher, or a priority of said audio decoding means to be lower, and, if the reference time is later than the decoding target time, said priority setting means sets the priority of said video decoding means to be made lower, or the priority of said audio decoding means to be higher.

The present invention of claim 6[sic] is a decoding method for reproducing by decoding a coded video data in a decoding unit, characterized in that
in the case where the coded video data in the decoding unit is input, the coded video data is held in the decoding unit by an n number of buffers (n is a natural number), a coded video data is selected from said buffers, and a decoding is performed by a video processing section,
when an input, a selection, and a decoding are performed on the buffers while using: an input process number indicating into which one of said buffers a coded video data is to be input; a video process number indicating from which one of said buffers a coded video data that is being decoded is selected; and a video process candidate number indicating a buffer which stores a coded video data that is to be selected after the video process is ended,
the coded video data in the decoding unit is input by input controlling means into a buffer corresponding to the input process number,
when the video process is ended, the video process candidate number at the ending timing is set to a next video process number, and a coded video data of a buffer corresponding to the video process candidate number is decoded, and
when an input in the decoding unit into said buffer is ended, an input process number corresponding to a buffer in which the input has been just ended is set to the video process candidate number, and a number other than the video process candidate number to which the input process number has been just set, and other than the video process number at the ending timing is set as the new input process number.

The present invention of claim 7[sic] is a decoding method for reproducing by decoding a coded audio data and a coded video data in a decoding unit, characterized in that
in the case where a multiplexed data in which the coded video data in the decoding unit and the coded audio data in the decoding unit are multiplexed is input, the multiplexed data is held in the decoding unit by an n number of buffers (n is a natural number), a coded video data and a coded audio data are selected from said buffers, and a decoding is performed by a video processing section and an audio processing section,
when an input, a selection, and a decoding are performed on the buffers while using: an input process number indicating into which one of said buffers a coded video data and a coded audio data are to be input; a video process number indicating from which one of said buffers a coded video data that is being decoded is selected; and a video process candidate number indicating a buffer which stores a coded video data that is to be selected after the video process is ended,
the multiplexed data in the decoding unit is input by input controlling means into a buffer corresponding to the input process number,
after the input of the multiplexed data into said
buffer is ended, the coded audio data is decoded by said audio processing section,
when a video process is ended, the video process candidate number at the ending timing is set to a next video process number, and a coded video data of a buffer corresponding to the video process candidate number is decoded, and
when the audio decoding process is ended, an input process number corresponding to a buffer in which the audio decoding process has been just ended is set to the video process candidate number, and a number other than the video process candidate number to which the input process number has been just set, and other than the video process number at the ending timing is set as the new input process number.

The present invention of claim 8[sic] is a decoding method for reproducing by decoding a coded audio data and a coded video data in a decoding unit, characterized in that
in the case where a multiplexed data in which the coded video data in the decoding unit and the coded audio data in the decoding unit are multiplexed is input, the multiplexed data is held in the decoding unit by an n number of buffers (n is a natural number) , a coded video data and a coded audio data are selected from said buffers, and a decoding is performed by a video processing section and an audio processing section,
when an input, a selection, and a decoding are performed on the buffers while using: an input process number indicating into which one of said buffers a coded video data and a coded audio data are to be input; a video process number indicating from which one of said buffers a coded video data that is being decoded is selected; an audio process number indicating from which one of said buffers a coded audio data that is being decoded is selected; and a video process candidate number indicating a buffer which stores a coded video data that is to be selected after the video process is ended,
the multiplexed data in the decoding unit is input by input controlling means into a buffer corresponding to the input process number,
after the input of the multiplexed data into said
buffer is ended, the coded audio data is decoded by said audio processing section,
when a video process is ended, the video process candidate number at the ending timing is set to a next video process number, and a coded video data of a buffer corresponding to the video process candidate number is decoded, and
when an input in the decoding unit to said buffer is ended, an input process number corresponding to a buffer in which the input has been just ended is set to the audio process number and the video process candidate number, and (1) a number other than the audio process number to which the input process number has been just set, and other than the video process number at the input ending timing, or (2) a number other than the video process candidate number to which the input process number has been just set, and other than the video process number at the input process timing is set as the new input process number.

The present invention of claim 10[sic] is a decoding method for reproducing by decoding a coded audio data in an audio decoding unit, wherein
in the case where the coded audio data in the audio decoding unit is held by an m number of buffers (m is a natural number), the coded audio data is selected from said buffers, and a decoding is performed by an audio processing section,
when an input, a selection, and a decoding are performed on the buffers while using: an input process number indicating into which one of said buffers a coded audio data is to be input; and an audio process number indicating from which one of said buffers a coded audio data that is being decoded is selected,
when an audio reference signal which is produced at time intervals corresponding to the audio decoding unit is produced, an audio buffer corresponding to the audio input number is caused to start an input of the coded audio data,
the coded audio data is selected from an audio buffer of the audio process number, the coded audio data is decoded by said audio processing section,
when a coded audio input in the decoding unit is ended, an audio input number corresponding to a buffer in which the input has been just ended is set to the audio process number by process number updating means, and in place a number other than the audio process number to which the audio input number has been just set is set as the new audio input number.

The present invention of claim 11[sic] is a decoding method for input and reproducing by decoding a coded data in a decoding unit, wherein
in the case where the coded data in the decoding unit is held by an m number of buffers (m is a natural number), the coded data is selected from said buffers, and a decoding is performed by a processing section,
when an input of a coded data into said buffers is ended, numbers of buffers in which the input is ended are accumulated into a process candidate list, when a coded data is selected for decoding from a predetermined buffer, a number of the selected buffer is deleted from the process candidate list,
when a process of a coded data is ended, among buffer numbers accumulated in the process candidate list, a buffer number an accumulation time of which is earliest is selected, and a decoding is performed by a processing section, and
when the coded data is to be input, a number of buffer numbers which are accumulated in the process candidate list is checked, and, if the number reaches a predetermined number a which is not larger than the number m of said buffers, the coded data is not input, and, if only buffer numbers a number of which is smaller than a are accumulated, the coded data is input.

The present invention of claim 17[sic] is a program recording medium characterized in that a program for realizing all or a part of steps of the decoding method according to any one of claims 1 to 17 by a computer is stored in said medium.

### Brief Description of Drawings

Fig. 1 is a block diagram illustrating a first embodiment of the invention.
Fig. 2 is a block diagram illustrating a second embodiment of the invention.
Fig. 3 is a block diagram illustrating a third embodiment of the invention.
Fig. 4 is a block diagram illustrating a fourth embodiment of the invention.
Fig. 5 is a block diagram illustrating a fifth embodiment of the invention.
Fig. 6 is a timing chart illustrating a decoding method in the fifth embodiment of the invention.
Fig. 7 is a block diagram illustrating a sixth embodiment of the invention.
Fig. 8 is a timing chart illustrating a decoding method in the sixth embodiment of the invention.
Fig. 9 is a block diagram illustrating a seventh embodiment of the invention.
Fig. 10 is a timing chart illustrating a decoding method in the seventh embodiment of the invention.
Fig. 11 is a block diagram illustrating an eighth embodiment of the invention.
Fig. 12 is a timing chart illustrating a decoding method in the eighth embodiment of the invention.
Fig. 13 is a block diagram illustrating a ninth embodiment of the invention.
Fig. 14 is a timing chart illustrating a decoding method in the ninth embodiment of the invention.
Fig. 15 is a block diagram illustrating a tenth embodiment of the invention.
Fig. 16 is a timing chart illustrating a decoding method in the tenth embodiment of the invention.
Fig. 17 is a schematic view illustrating the configuration of a usual PC.
Fig. 18 is a block diagram illustrating a conventional method of decoding a coded video and a coded audio.
Fig. 19 is a block diagram illustrating a conventional method of decoding a coded video and a coded audio which are multiplexed.
Fig. 20 is a timing chart showing the operation of the embodiment of Fig. 1.

### Best Mode for Carrying Out the Invention

Hereinafter, embodiments of the invention will be described with reference to the drawings. In the embodiments described below, as the basic time unit for video and audio decoding processes, one frame period of an NTSC signal of t = 1001/30 [msec.] is used. It is assumed that all the procedures of processes which will be described in the embodiments are described as programs for a PC, calculation is performed by a CPU, and video and audio decodings are performed in different threads.

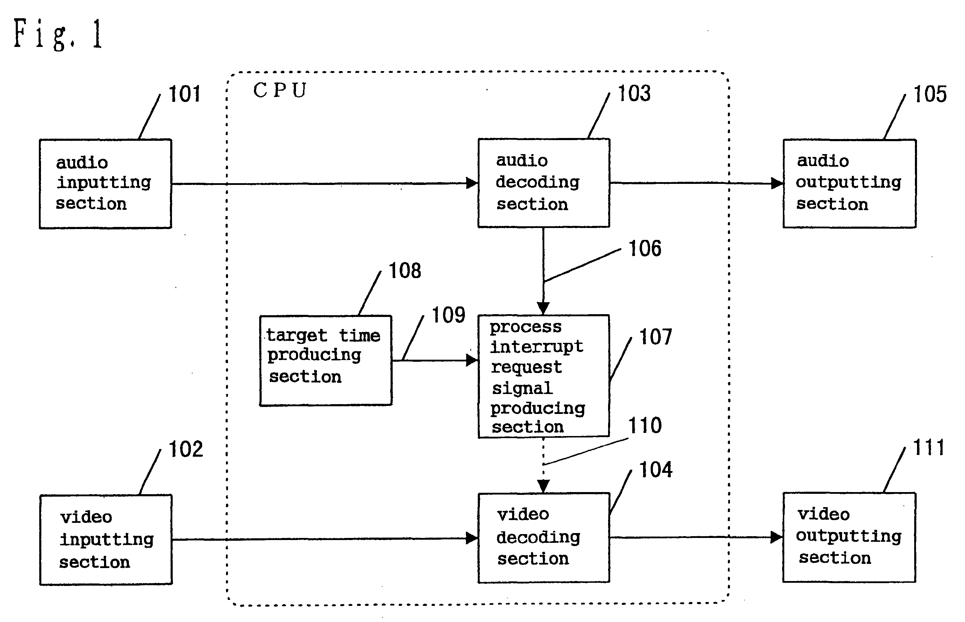

Fig. 1 is a block diagram illustrating a first embodiment of the invention. In Fig. 1, 101 denotes an audio inputting section, 102 denotes a video inputting section, 103 denotes an audio decoding section, 104 denotes a video decoding section, 105 denotes an audio outputting section, 106 denotes an audio decoding completion time, 107 denotes a process interrupt request signal producing section, 108 denotes a target time producing section, 109 denotes a target time, 110 denotes a video decoding interrupt request signal, and 111 denotes a video outputting section.

Hereinafter, the operation of the first embodiment will be described.

A coded audio signal which is input from the audio inputting section 101, and a coded video signal which is input from the video inputting section 102 are decoded by the audio decoding section 103 and the video decoding section 104, respectively.

The audio decoding section 103 transmits the decoded audio to the audio outputting section 105 to reproduce the audio, and notifies the process interrupt request signal producing section 107 of the audio decoding completion time 106.

On the other hand, since the audio reproduction is performed in real time, the target time producing section 108 produces the target time 109 for the audio decoding completion for each frame, and notifies the process interrupt request signal producing section 107 of the produced target time. When the time of starting the process is indicated by s, the target time when the audio decoding process for an n-th frame is completed is s + tn.

The process interrupt request signal producing section 107 compares the target time 109 produced by the target time producing section 108 with the audio decoding completion time 106, and detects for each frame whether the decoding process is delayed or not.

If the audio decoding completion time 106 is later than the target time 109 (if the completion report is not received before the target time, it is determined that the audio decoding completion time lags) , the process interrupt request signal producing section 107 transmits the video decoding interrupt request signal 110 to the video decoding section 104. When the video decoding section 104 receives the video decoding interrupt request signal 110, the video decoding section 104 interrupts the video decoding process. At this time, the CPU can allocate more resources to the audio decoding process. As a result, completion of the subsequent audio decoding process can be made earlier than the target time.

If the process interrupt request signal producing section 107 detects that the audio decoding completion time 106 is earlier than the target time 109, the process interrupt request signal producing section 107 stops the transmission of the video decoding interrupt request signal 110. At this time, the video decoding section 104 starts decoding of a video signal of the frame in which the audio decoding has been just completed, and the decoded video is output from the video outputting section 111.

As described above, in the first embodiment of the invention, when completion of the audio decoding lags behind the target time, the video process is interrupted and the audio decoding process is preferentially performed, whereby the audio signal is enabled to be reproduced in real time.

Depending on the performance of the CPU, when the transmission of the video decoding interrupt request signal 110 is stopped, the video decoding section 104 may start decoding of a video signal of a frame succeeding that in which the audio decoding has been just completed, whereby the video and audio signals can be synchronized with each other.

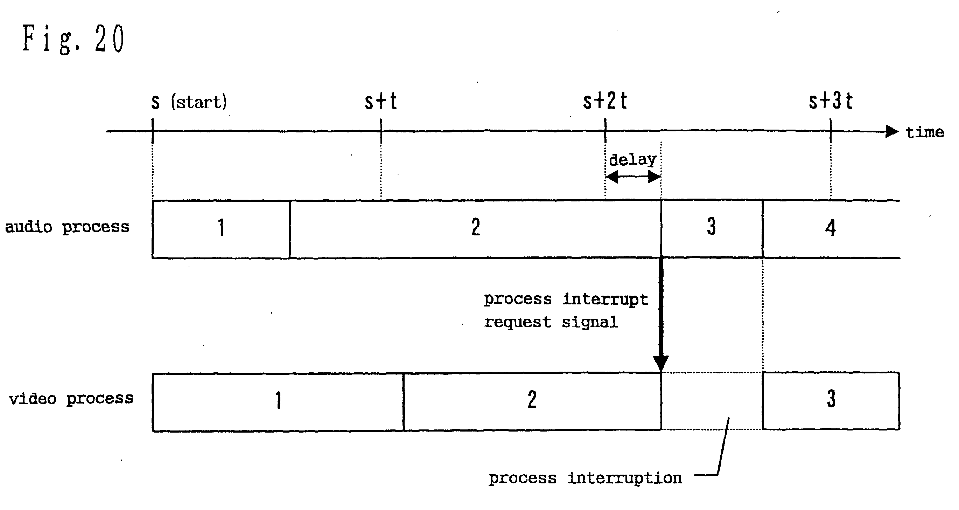

In order to illustrate the flow of the above-mentioned operation, Fig. 20 shows a timing chart of the operation.

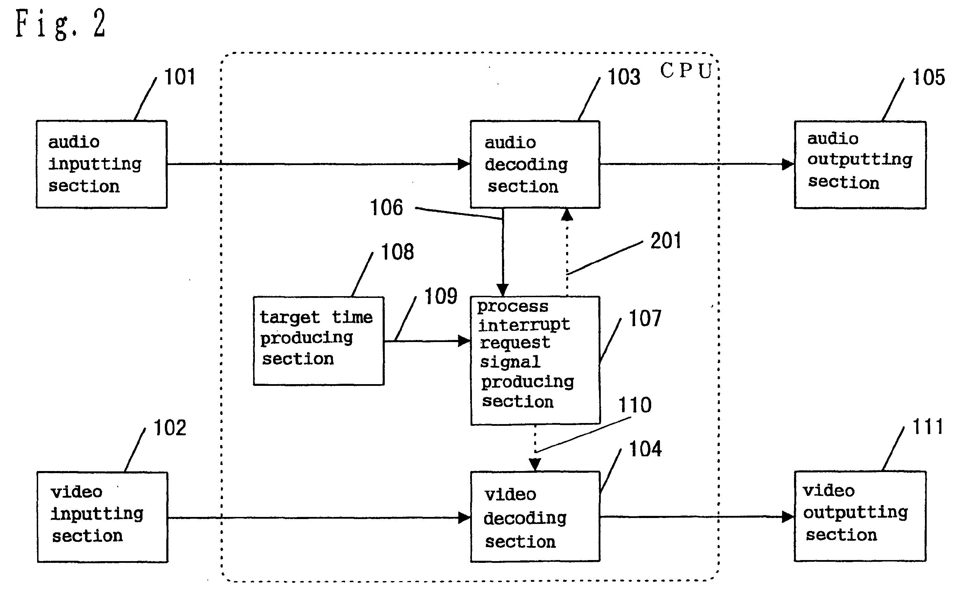

Fig. 2 is a block diagram illustrating a second embodiment of the invention. In Fig. 2, 201 denotes an audio decoding interrupt request signal.

Hereinafter, the operation of the second embodiment will be described with paying stress on portions which are different from the first embodiment.

In the same manner as the first embodiment, the audio decoding section 103 produces the audio decoding completion time 106, and the target time producing section 108 produces the target time 109.

If it is detected that the audio decoding completion time 106 is earlier than the target time 109, the process interrupt request signal producing section 107 transmits the audio decoding interrupt request signal 201 to the audio decoding section 103 till the time reaches the target time 109. During a period when the audio decoding interrupt request signal 201 is received, the audio decoding section 103 interrupts the audio decoding process. At this time, the CPU can allocate more resources to the video decoding process. As a result, the video reproduction rate can be improved.

If the process interrupt request signal producing section 107 detects that the audio decoding completion time 106 is later than the target time 109, in the same manner as the first embodiment, the process interrupt request signal producing section 107 transmits the video decoding interrupt request signal 110 to the video decoding section 104, to interrupt the video decoding process, so that the audio output is performed in real time.

As described above, in the embodiment of the invention, when the decoding of an audio signal is completed earlier than the target time, the audio decoding process is interrupted till the time reaches the target time, and, during this period, the CPU resource is allocated to the video decoding process, whereby the audio signal is enabled to be reproduced in real time and the video reproduction rate can be improved.

In the embodiment, the transmission period of the audio decoding interrupt request signal 201 is set to extend from the audio decoding completion time to the decoding completion target time. The transmission period of the audio decoding interrupt request signal 201 can be freely set in a range where the real time property of the audio output is not impaired. In other words, the interruption period may be shortened, or the interruption may be made longer than the target.

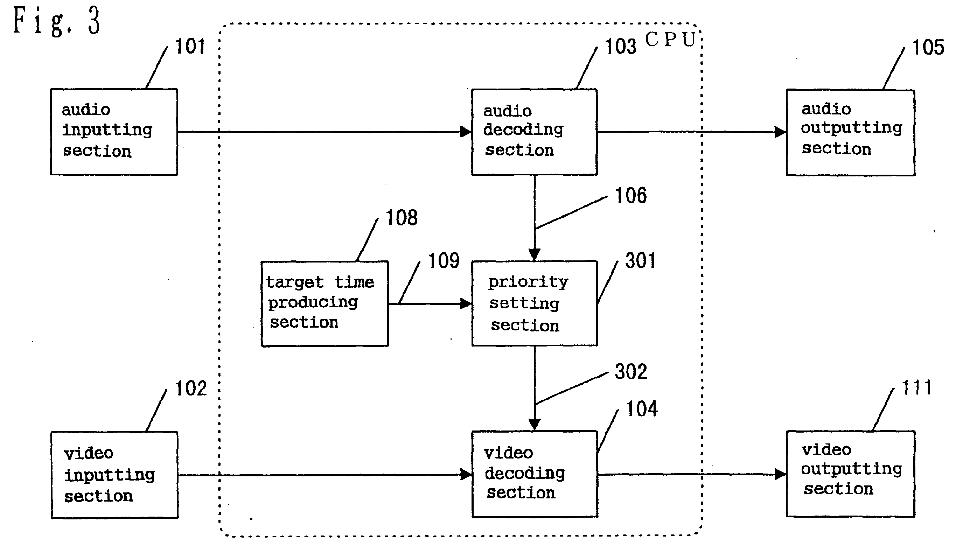

Fig. 3 is a block diagram illustrating a third embodiment of the invention. In Fig. 3, 301 denotes a priority setting section, and 302 denotes a video decoding priority.

Hereinafter, the operation of the third embodiment will be described with paying stress on portions which are different from the first embodiment.

In the embodiment, for the sake of simplicity, it is assumed that the priority has either of three steps of 0, 1, and 2, and, as the numeral is larger, the process priority in the CPU is higher.

Prior to start of the decoding process, the process priority in the CPU is set for each of the audio and video decodings. For example, as the initial set value of the priority, the audio decoding is provided with 2, and the video decoding with 1.

In the same manner as the first embodiment, the audio decoding section 103 produces the audio decoding completion time 106, and the target time producing section 108 produces the target time 109.

If the priority setting section 301 detects that the audio decoding completion time 106 is later than the target time 109, the priority setting section 301 reduces the video decoding priority 302 to 0, thereby making the priority of the audio decoding relatively higher. The CPU performs scheduling of processes in accordance with their priorities.

In this case, the audio decoding process is preferentially performed, and hence the real time property of the audio decoding can be ensured.

If it is detected that the audio decoding completion time 106 is earlier than the target time 109, the video decoding priority is returned from 0 to 1 by the priority setting section 301.

As described above, in the third embodiment of the invention, when completion of the audio decoding lags behind the target time, the priority of the video signal is lowered so as to relatively raise the priority of the audio decoding, so that the audio decoding is preferentially performed in the CPU, thereby enabling the audio to be reproduced in real time.

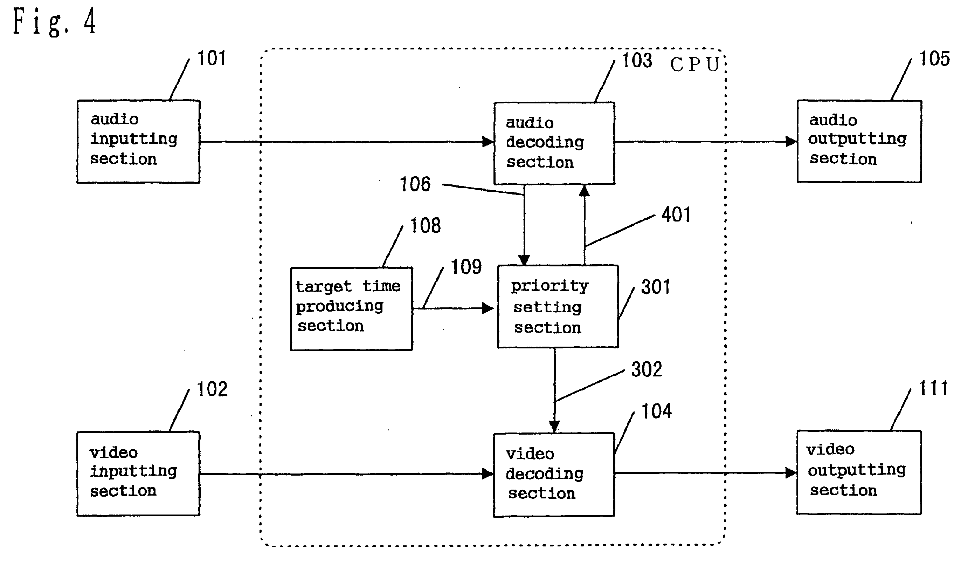

Fig. 4 is a block diagram illustrating a fourth embodiment of the invention. In Fig. 4, 401 denotes an audio decoding priority.

Hereinafter, the operation of the fourth embodiment will be described with paying stress on portions which are different from the third embodiment.

In the embodiment also, it is assumed that the priority has either of three steps of 0, 1, and 2, and, as the numeral is larger, the process priority in the CPU is higher. Prior to start of the decoding process, the initial set values of the priorities of the audio and video decodings are set to 2 and 1, respectively.

In the same manner as the third embodiment, the audio decoding section 103 produces the audio decoding completion time 106, and the target time producing section 108 produces the target time 109.

If the priority setting section 301 detects that the audio decoding completion time 106 is earlier than the target time 109, the priority setting section 301 sets the audio decoding priority 401 to 0. At this time, the CPU preferentially performs the video decoding process, with the result that the video reproduction rate can be improved. When the time reaches the target time 109, the audio decoding priority 401 is returned to the initial set value or 2.

If it is detected that the audio decoding completion time 106 is later than the target time 109, in the same manner as the third embodiment, the priority setting section 301 reduces the video decoding priority 302, thereby enabling the real time property of the audio decoding to be ensured.

As described above, in the embodiment of the invention, when the decoding of an audio signal is completed earlier than the target time, the audio decoding priority is lowered and the video decoding priority is raised till the time reaches the target time, thereby causing the CPU to preferentially perform the video decoding process. As a result, the video reproduction rate can be improved while maintaining the real time output of the audio.

In the embodiment, when the audio decoding is completed earlier than the target time, the audio decoding priority is lowered. As far as the audio decoding priority is relatively lower and the video decoding priority is relatively higher, alternatively, the priorities may be selected in any manner. The period when the audio decoding priority is made relatively lowered extends to the target time. This period may be freely set in a range where the real time property of the audio output is not impaired.

In the third and fourth embodiments, the priority has three steps. Alternatively, the priority may have any number of steps, and may have continuous values in place of the discrete values as those of the embodiments.

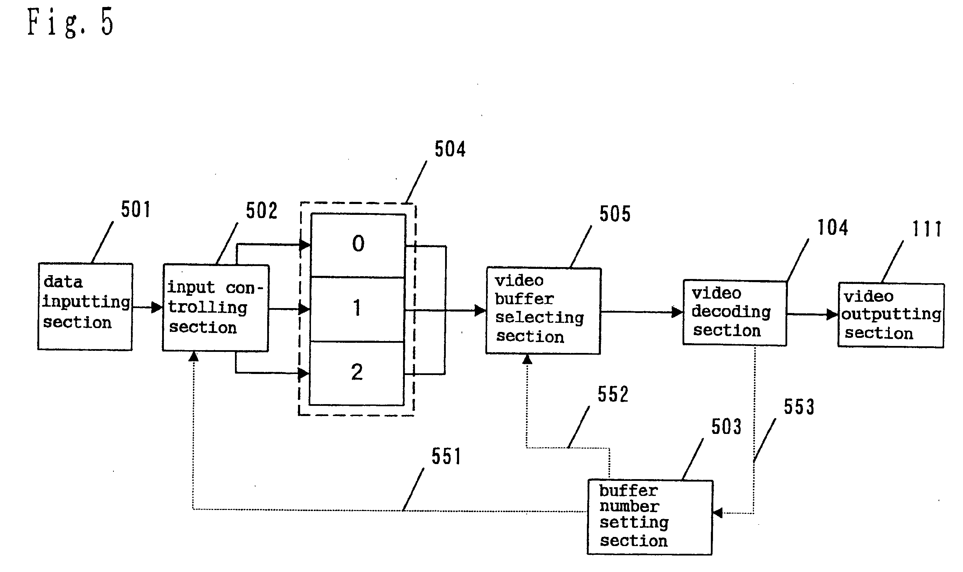

Fig. 5 is a block diagram illustrating a fifth embodiment of the invention. In Fig. 5, 501 denotes a data inputting section, 502 denotes an input controlling section, 503 denotes a buffer number setting section, 504 denotes a buffer, 505 denotes a video buffer selecting section, 551 denotes an input process number, 552 denotes a video process number, and 553 denotes a video decoding end signal.

In the subsequent embodiments, it is assumed that the buffer 504 has three sub-buffers of buffer numbers 0, 1, and 2. Each of the sub-buffers stores a data of one frame. It is assumed that the data input and the video decoding operate in different threads.

Next, the operation of the embodiment will be described.

For a coded video data which is input from the data inputting section 501, the input controlling section 502 designates the sub-buffer corresponding to the input process number 551 which is supplied from the buffer number setting section 503. The coded video data is held by the buffer 504.

After a data of one frame are input, the video buffer selecting section 505 extracts a coded video data from the sub-buffer corresponding to the video process number 552 supplied from the buffer number setting section 503, and supplies the extracted data to the video decoding section 104.

In the video decoding section 104, the coded video is decoded, and then output from the video outputting section 111. When the video decoding for one frame is ended, the video decoding end signal 553 is supplied to the buffer number setting section 503.

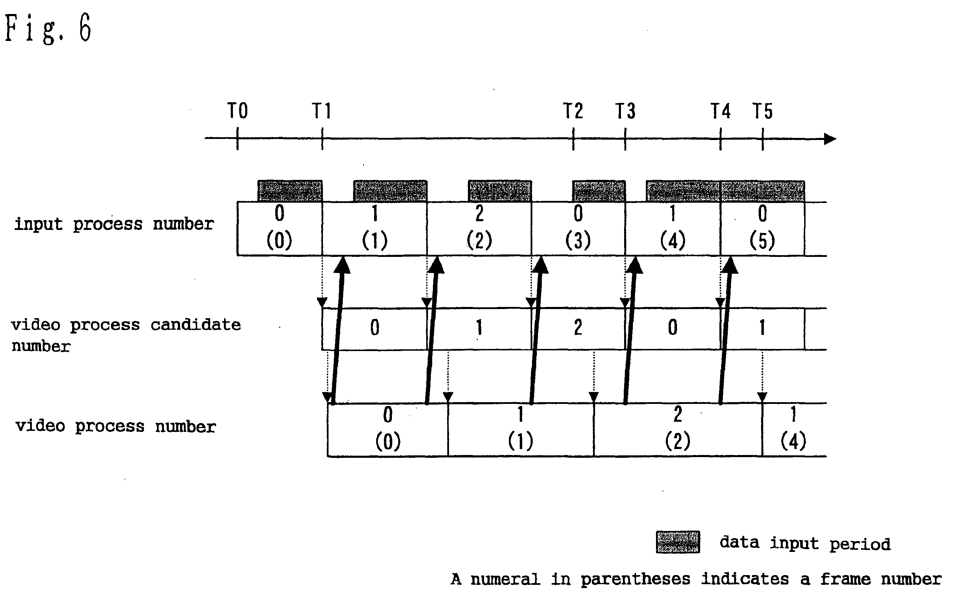

Fig. 6 is a time chart illustrating selections of the input process number and the video process number in the buffer number setting section 503 of the embodiment. In Fig. 6, a video process candidate number is the number of the sub-buffer in which, when the current video decoding is completed, the frame to be next decoded is held, and the video process number is the number of the sub-buffer which is currently subjected to the video process.

For the input controlling section 502 of Fig. 5, the input process number is the number of the sub-buffer which is to be currently subjected to a writing process.

In the buffer number setting section, the video process candidate number is set in addition to the input process number and the video process number corresponding to the sub-buffer 0, 1, or 2. All the initial values of these numbers are set to "0."

At time T0, the input of a data of a 0-th frame is started, and the data is input into sub-buffer 0 corresponding to the input process number 0. When the input of the 0-th frame is completed at time T1, the video process candidate number is updated to "0" that is the buffer number in which the input has been just completed, and a new input process number is set to sub-buffer 1 (either of "1" and "2" is available, and, in this case, "1" is provisionally is set for the sake of convenience in description) that is a number other than the video process candidate number (i.e., other than "0") and other than the video process number (i.e., other than "0").

At the same time, "0" which is the video process candidate number is set as the video process number. In the video buffer selecting section, the coded video is obtained from sub-buffer 0 corresponding to the video process number 0, and the video decoding process is started.

At time T2, a coded video of a third frame is input into sub-buffer 0 corresponding to the input process number 0.

When the input of the coded video of the third frame is ended at time T3, "0" which is the input process number is set as the video process number, and 1 that is a number other than the video process number at time T3 (i.e., other than "2") and other than the updated video process candidate number (i.e., other than "0") is set as a new input process number.

When the input of the coded video of a fourth frame into buffer 1 is completed at time T4, "1" which is the input process number is set as the video process candidate number, and "0" that is a number other than video process candidate number "1" and the video process number 2 at time T4 + ΔT (where ΔT is a minute time period) is designated as a new input process number.

When the video decoding of the second frame which has been stored in sub-buffer 2 is ended at time T5, "1" which is the video process candidate number at time T5 is set as the video process number, and the decoding of the fourth frame which is held by sub-buffer 1 at this timing is started.

In the case of Fig. 6, the third frame is not decoded. In the video decoding, even when about one frame slip occurs in every several frames, a visually serious problem is not produced.

As described above, according to the embodiment, when a buffer for at least three frames is prepared, a buffer which is being subjected to the video decoding process is prevented from being overwritten with a new coded data. Therefore, the video reproduction can be performed at a rate as high as possible in accordance with the ability of the CPU.

In the embodiment described above, sub-buffers for three frames are prepared. Also when sub-buffers for four or more frames are prepared, the same effects as those of the case where sub-buffers for three frames are prepared are attained.

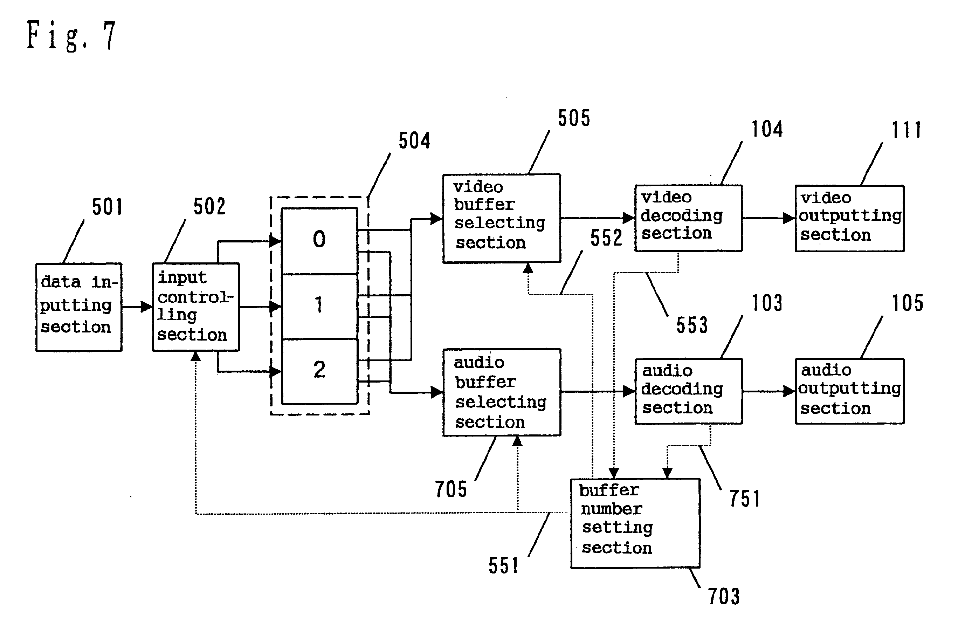

Fig. 7 is a block diagram illustrating a sixth embodiment of the invention. In Fig. 7, 703 denotes a buffer number setting section, 705 denotes an audio buffer selecting section, and 751 denotes an audio decoding end signal.

In the embodiment also, in the same manner as the first embodiment, it is assumed that the buffer 504 has three sub-buffers of buffer numbers 0, 1, and 2. In the embodiment, it is assumed that the inputting process and the audio process are performed in the same thread and the audio process is started immediately after the input of a data in which video and audio data of one frame are multiplexed, into the sub-buffers is ended. Therefore, a sub-buffer of the same buffer number contains video and audio data of the same frame. Furthermore, it is assumed that the video process is performed in a thread which is different from the thread for the inputting process and the audio process.

Next, the operation of the embodiment will be described.

In the input controlling section 502, a data which is input from the data inputting section 501 and in which a coded video and a coded audio are multiplexed is held by the sub-buffer corresponding to the input process number 551 which is supplied from the buffer number setting section 703.

After a data of one frame is input, the audio buffer selecting section 705 extracts a coded audio data from the sub-buffer corresponding to the input process number 551 supplied from the buffer number setting section 7303, i.e., the sub-buffer in which the data input has been just completed, and supplies the extracted data to the audio decoding section 103.

In the audio decoding section 103, the coded audio is decoded, and then output from the audio outputting section 105. When the audio decoding is completed, the audio decoding end signal 751 is supplied to the buffer number setting section 703.

The video buffer selecting section 505 extracts a coded video data from the sub-buffer in the buffer 504 and corresponding to the video process number 552 supplied from the buffer number setting section 703, and supplies the extracted data to the video decoding section 104. In the video decoding section 104, the coded video is decoded, and then output from the video outputting section 111. When the video decoding for one frame is ended, the video decoding end signal 553 is supplied to the buffer number setting section 703.

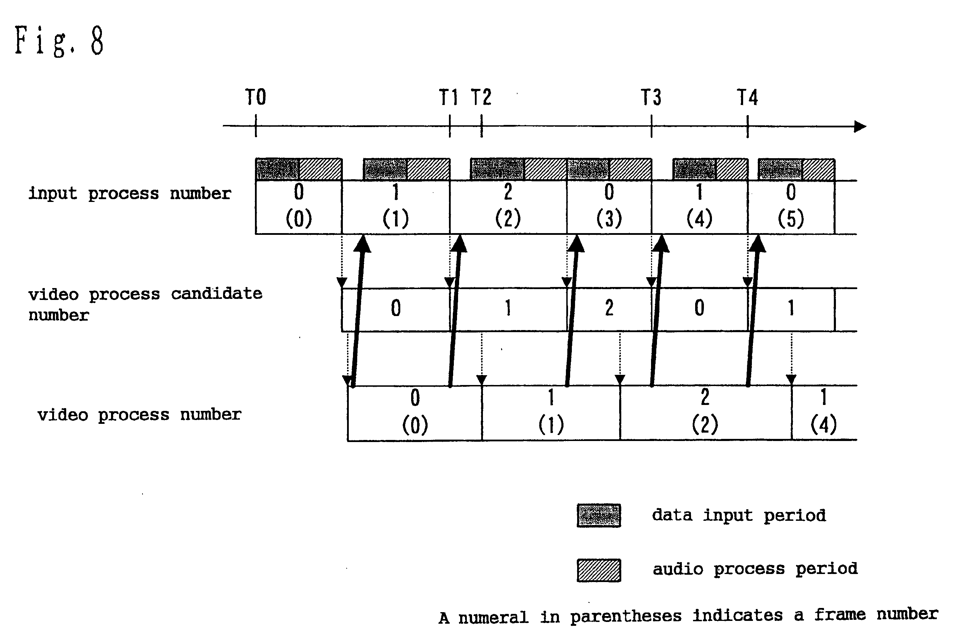

Fig. 8 is a time chart illustrating the setting of the input process number and the video process number in the buffer number setting section 703 of the embodiment. In Fig. 8, a video process candidate number is the number of the sub-buffer in which, when the current video decoding is completed, the frame to be next decoded is held, and the video process number is the number of the sub-buffer which is currently subjected to the video process.

For the input controlling section 502 of Fig. 7, the input process number is the number of the sub-buffer into which a data of a frame is to be written. For the audio buffer selecting section, the input process number is the number of the sub-buffer from which a multiplexed audio data in a data of a frame is read.

In the buffer number setting section, the video process candidate number is set in addition to the input process number and the video process number. All the initial values of these numbers are set to "0."

As described in the Back Ground section, required calculation in an audio decoding process is usually smaller than that in a video decoding process, and, with respect to a decoding process time period for one frame, an audio is shorter than a video. In order to prevent dull audio reproduction or sound skipping from occurring, the priority of the audio decoding process thread is sometimes set to be higher than that of the video decoding process thread.

At time T0, a data of a 0-th frame is input into sub-buffer 0 corresponding to the input process number 0. When the input is completed, a coded audio is immediately extracted from sub-buffer 0 in which the input has been just completed, and the audio decoding process is started.

In response to the reception of the audio decoding end signal from the audio decoding section, the buffer number setting section 703 immediately inputs the input process number into the video process candidate number, and, as a new input process number, sets a number other than the video process number and the updated video process candidate number.

In this case, as the new input process number, a number other than the video process number is selected in order to prevent overwriting from occurring in a sub-buffer which is being subjected to the video process at that timing. As the new input process number, a number other than the updated video process candidate number is selected in order to prevent overwriting from occurring in a sub-buffer storing a data which is scheduled to be next subjected to the video process.

When the video decoding end signal is received from the video decoding section, the video process candidate number which is the buffer number where a data that is scheduled to be next subjected to the video process is set as a new video process number.

When the audio decoding of the first frame extracted from sub-buffer 1 is ended at time T1 of Fig. 8, "1" which is the immediately previous input process number is set as the video process candidate number.

At T1 + ΔT (where ΔT is a minute time period), the input process number is "1," and the video process number is "0." Therefore, "2" is set as the new input process number.

Then, at time T2, the end of the video decoding of the 0-th frame extracted from buffer 0 is notified. Therefore, "1" which is the video process candidate number at time T2 is set as the new video process number.

At time T3, similarly, the end of the audio decoding of the third frame extracted from sub-buffer 0 is notified, and "0" which is the immediately previous input process number is set as the video process candidate number. At time T3 + ΔT (where ΔT is a minute time period) , the input process number is "0," and the video process number is "2." Therefore, the new input process number is "1" which is a value other than "0" and "2".

In the embodiment, when the audio decoding end signal is transmitted plural times (times T3 and T4) during a certain video decoding period as in the case of the second frame of Fig. 6, frame skipping occurs in the reproduced video.

With respect to a video signal, however, a visual problem is not produced even when about one frame skipping occurs in every several frames.

As described above, according to the embodiment, a buffer for at least three frames is prepared, and the buffer management described in the embodiment is conducted, whereby the audio decoding can be input without lacking any frame, and a buffer which is being subjected to the video decoding process is prevented from being overwritten with a new multiplexed data. Therefore, sound skipping does not occur during the audio reproduction, and the video reproduction can be performed at a rate as high as possible in accordance with the ability of the CPU.

If a buffer for three frames is simply held and the buffer operation of the embodiment is not performed, there arises a possibility that overwriting is performed on a buffer holding a data which should be originally next reproduced, and not only reduction of the image reproduction rate but also missing of the audio reproduction occurs.

The decoded audio signal of one frame is asynchronous. Therefore, when the audio outputting section has a buffer and an audio output reference signal, and frames are reproduced one by one in accordance with the audio output reference signal, the audio is correctly reproduced without being dulled. When the audio output reference signal is supplied also to the video outputting section, the video and the audio can be output in synchronization with each other.

In the embodiment, when the inputting process is ended, the audio decoding process is immediately started. The invention is not restricted to this as far as both the inputting process and the audio decoding process can be ended within one frame period.

In the embodiment described above, sub-buffers for three frames are prepared. Also when sub-buffers for four or more frames are prepared, the same effects as those of the case where sub-buffers for three frames are prepared are attained.

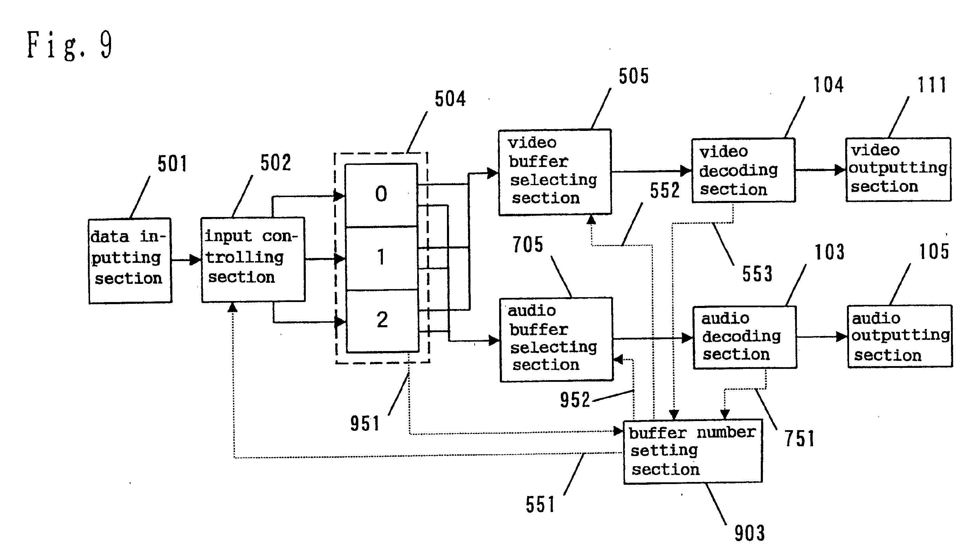

Fig. 9 is a view illustrating a seventh embodiment of the invention. In Fig. 9, 903 denotes a buffer number setting section, 951 denotes an input end signal, and 952 denotes an audio buffer number.

In the embodiment also, in the same manner as the fifth embodiment, it is assumed that the buffer 504 has three sub-buffers of buffer numbers 0, 1, and 2. In the embodiment, it is assumed that the inputting process, the audio process, and the video process are respectively performed in different threads.

Next, the operation of the embodiment will be described.

In the input controlling section 502, a data which is input from the data inputting section 501 and in which a coded video and a coded audio are multiplexed is held by the sub-buffer corresponding to the input process number 551.

When the input of a data of one frame is completed, the buffer 504 transmits the input end signal 951 to the buffer number setting section 903.

In the buffer number setting section 903, when the input end signal 951 is received, the input process number is set to the audio process number 952 and the video process candidate number, and the audio process number 952 is immediately transmitted to the audio buffer selecting section 705.

A number other than the video process number and the audio process number is set as a new input process number. The audio buffer selecting section 705 extracts a coded audio data from the sub-buffer corresponding to the audio process signal 952, and supplies the extracted data to the audio decoding section 103.

The video decoding operates in the same manner as the sixth embodiment.

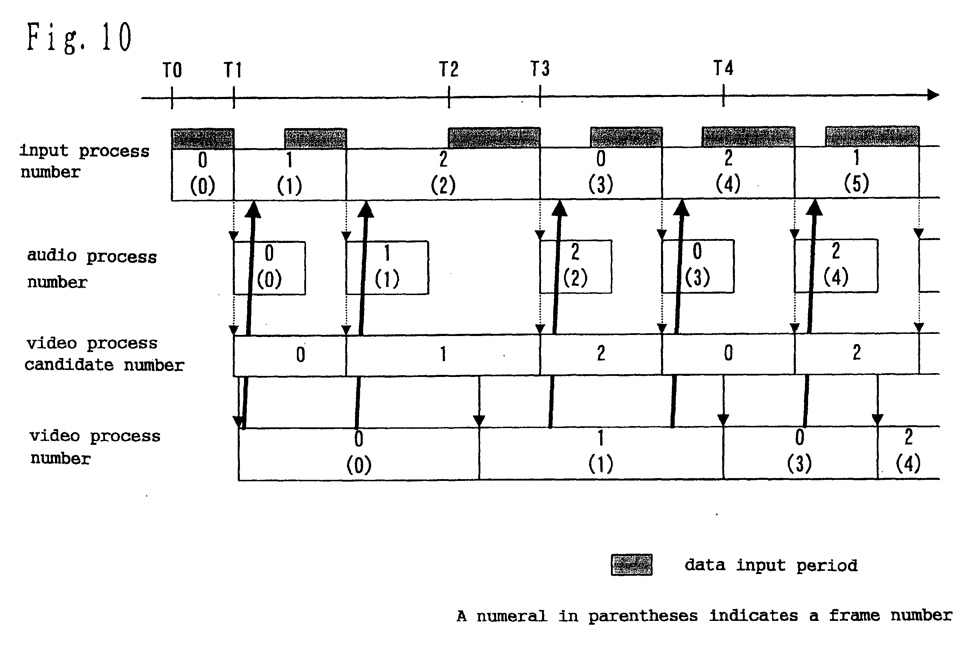

Fig. 10 is a time chart illustrating selections of the input process number, the audio process number, and the video process number in the buffer number setting section 903 of the embodiment.

At time T0, the input of a multiplexed data of a 0-th frame into sub-buffer 0 corresponding to the input process number 0 is started. When the input is completed at time T1, the input end signal 951 is transmitted from the buffer to the buffer number setting section, "0" is set to the audio process number and the video process candidate number, and
a number (in this case, "1") other than the video process number "0" and the audio process number "0" is set as a new input process number. At the same time, a coded audio is extracted from sub-buffer 0 and the audio decoding process is started.

Furthermore, the video process candidate number 0 is immediately set to the video process number, the coded video is extracted from sub-buffer 0, and the video decoding process is started.

At time T2, the input of a multiplexed data of a second frame into sub-buffer 2 is started.

When the input of the multiplexed data of the second frame into sub-buffer 2 is completed at time T3, "2" which is the buffer number where the input is completed is set to the audio process number and the video process candidate number, and the audio decoding of the second frame is immediately started. Furthermore, "0" other than the video process number "1" and the audio process number "2" at time T3 is set as a new input process number.

By contrast, at time T4, the video decoding of a first frame extracted from sub-buffer 1 is ended. At this time, the video process candidate number "0" at time T4 is set as the video process number, and, in the next video decoding process, the decoding of a third frame held by sub-buffer 0 is started.

As described above, according to the embodiment, a buffer for at least three frames is prepared, and the buffer management described in the embodiment is conducted, whereby the audio decoding can be performed without lacking any frame, reproduction is possible without any sound skipping, and a buffer which is being subjected to the video decoding process is prevented from being overwritten with a new coded data. Therefore, the video reproduction also can be performed at a rate as high as possible in accordance with the ability of the CPU.

If a buffer for three frames is simply held and the buffer operation of the embodiment is not performed, there arises a possibility that overwriting is performed on a buffer holding a data which should be originally next reproduced, and not only reduction of the image reproduction rate but also missing of the audio reproduction occurs.

The seventh embodiment has a configuration in which the audio process signal 952 is transmitted from the buffer number setting section 903. Alternatively, a configuration in which the signal is directly transmitted from the buffer 504 may be employed.

In the embodiment, the audio decoding is started immediately after the input of one frame is ended. The invention is not restricted to this as far as the audio decoding process can maintain the real time property.

In the embodiment, sub-buffers for three frames are prepared. Also when sub-buffers for four or more frames are prepared, the same effects as those of the case where sub-buffers for three frames are prepared are attained.

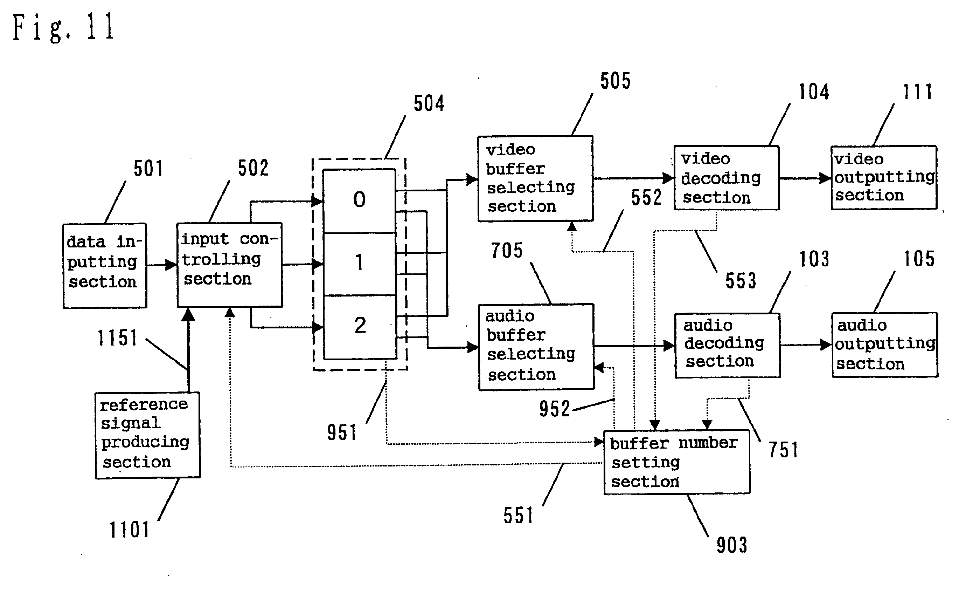

Fig. 11 is a view illustrating an eighth embodiment of the invention. In Fig. 11, 1101 denotes a reference signal producing section, and 1151 denotes a reference signal.

Next, the operation of the embodiment will be described with paying stress on portions which are different from the seventh embodiment.

In the embodiment, in the same manner as the seventh embodiment, it is assumed that the inputting process, the audio process, and the video process are respectively performed in different threads.

The reference signal producing section 1101 supplies the reference signal 1151 to the input controlling section 502, once in one frame period (in the case of an NTSC signal, about 1/30 sec., or more correctly 1001/30 msec.). When the reference signal 1151 is input, the input controlling section 502 starts to obtain a multiplexed data from the data inputting section 501, and supplies the multiplexed data to the sub-buffer corresponding to the input process number 551 which is supplied from the buffer number setting section 503. When the input of a data of one frame is completed, the buffer 504 transmits the input end signal 951 to the buffer number setting section 903.

In the buffer number setting section 903, when the input end signal 951 is received, the input process number is set to the audio process number 952 and the video process candidate number, and the audio process number 952 is immediately transmitted to the audio buffer selecting section 305. A number other than the video process number and the audio process number is set as a new input process number. The audio buffer selecting section 705 extracts a coded audio data from the sub-buffer corresponding to the audio process signal 952, and supplies the extracted data to the audio decoding section 103.

The video decoding operates in the same manner as the seventh embodiment.

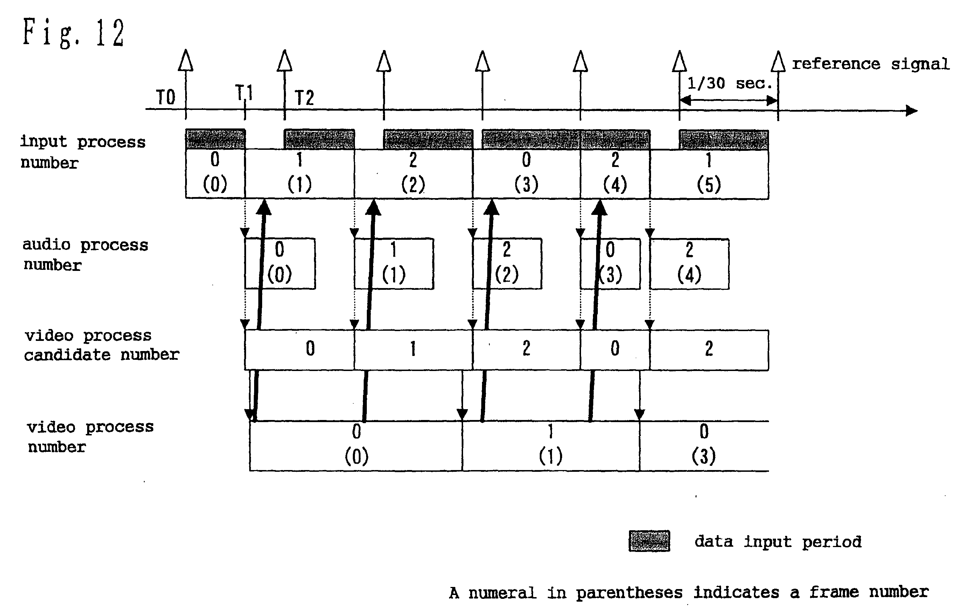

Fig. 12 is a time chart illustrating selections of the input process number, the audio process number, and the video process number in the buffer number setting section 903 of the embodiment.

When the reference signal is input at time T0, the multiplexed data of the 0-th frame begins to be input into sub-buffer 0 in accordance with the input process number 0. When the input is completed at time T1, the input end signal is transmitted from the buffer to the buffer number setting section, "0" is set to the audio process number and the video process candidate number, and a number (in this case, "1") other than the video process number "0" and the audio process number "0" is set as a new input process number. At the same time, a coded audio is extracted from buffer 0 and the audio decoding process is started.

Furthermore, the video process candidate number "0" is immediately set to the video process number, the coded video is extracted from sub-buffer 0, and the video decoding process is started.

When the next reference signal is input at time T2, the multiplexed data of the first frame is input into sub-buffer 1 corresponding to the input process number "1."

The other operations are identical with those of the seventh embodiment.

As described above, according to the embodiment also, a buffer for at least three frames is prepared, and the buffer management described in the embodiment is conducted, whereby video and audio signals can be efficiently decoded and reproduced. When a reference signal is used as in the embodiment, particularly, the input of a multiplexed data is performed in the unit of one frame without delay, and abnormal reproduction due to delay of the audio decoding process is prevented from occurring.

In the sixth, seventh, and eighth embodiments, reproduction of only a video, or that of only an audio may be performed.

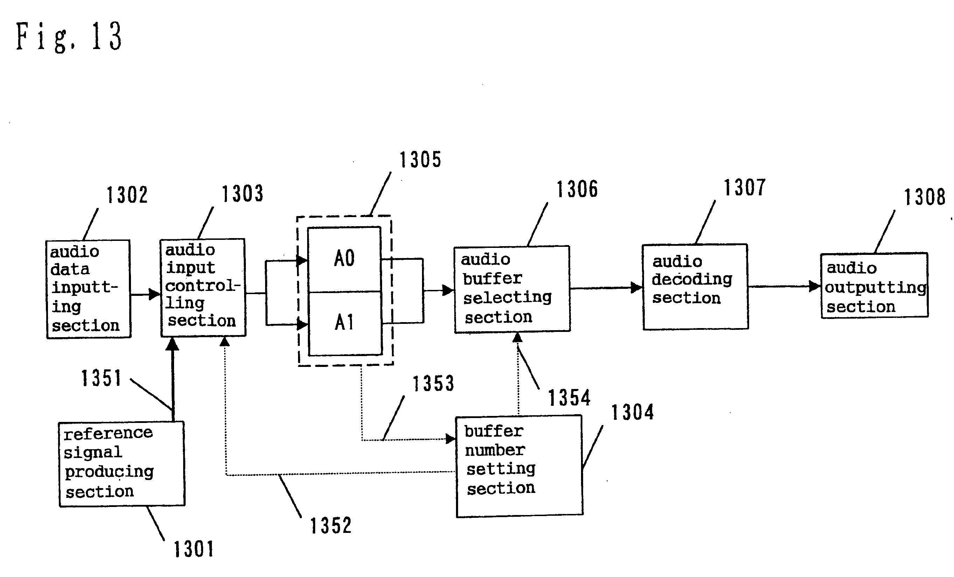

Fig. 13 is a view illustrating a ninth embodiment of the invention. In Fig. 13, 1301 denotes a reference signal producing section, 1302 denotes an audio data inputting section, 1303 denotes an audio input controlling section, 1304 denotes a buffer number setting section, 1305 denotes an audio buffer, 1306 denotes an audio buffer selecting section, 1307 denotes an audio decoding section, 1308 denotes an audio outputting section, and 1351 denotes a reference signal.

In the embodiment, it is assumed that the audio buffer has two sub-buffers 0 and 1, and the audio inputting process and the audio decoding process are performed in different threads.

Next, the operation of the embodiment will be described.

The reference signal producing section 1301 supplies the reference signal 1351 to the audio input controlling section 1302, once in one frame period (in the case of an NTSC signal, about 1/30 sec., or more correctly 1001/30 msec.).

When the reference signal 1351 is input, the audio input controlling section 1303 starts to obtain a coded audio data from the audio data inputting section 1302, and the data is held by the sub-buffer in the audio buffer 1305 corresponding to the audio input number 1352 which is supplied from the buffer number setting section 1304. When the input of a coded audio data of one frame is completed, the audio buffer 1305 transmits the audio input end signal 1353 to the buffer number setting section 1304.

In the buffer number setting section 1304, when the audio input end signal 1353 is received, the audio process number 1354 is immediately transmitted to the audio buffer selecting section 1306. The audio buffer selecting section 1306 extracts the coded audio data from the sub-buffer in the audio buffer 1305 and corresponding to the audio process number 1354, and supplies the extracted data to the audio decoding section 1307. The audio decoding section 1307 decodes the coded audio data, and supplies the decoded data to the audio outputting section 1308 to perform audio reproduction.

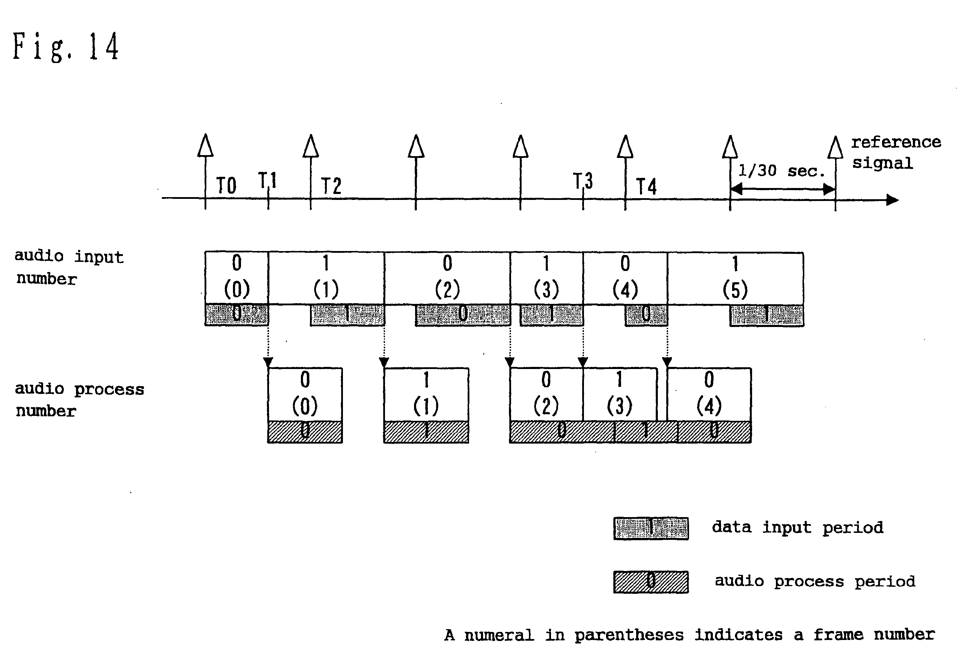

Fig. 14 is a time chart illustrating selections of the audio input number and the audio process number in the buffer number setting section 1304 of the embodiment.

When the reference signal is generated at time T0, "0" is set as the audio input number, and the input of a coded audio data of a 0-th frame is started. The destination of the input is sub-buffer 0 of the audio buffer.

When the audio input of the 0-th frame is ended at time T1, "0" which is the audio input number is set to the audio process number, and a number other than "0," i.e., "1" is set as the audio input number. At the same time, the coded audio data of the 0-th frame is obtained from sub-buffer 0 corresponding to the audio process number 0, and the audio decoding is started.

When the reference signal is generated at time T2, a coded audio data of a first frame is input into sub-buffer 1 of the audio buffer corresponding to the audio input number "1."

When a processor of Pentium or higher which is mainly used as a CPU is employed, the audio decoding process for one frame can be usually ended within a period which is sufficiently shorter than one frame period. Even if the decoding of a second frame is being performed when the input of the coded audio of a third frame is ended at time T3, therefore, the decoding can be ended before the input of the next coded audio is started at time T4, so that the audio reproduction is performed without producing a problem.

As described above, according to the embodiment, when a buffer for at least two frames is prepared, the audio decoding is enabled in most cases without lacking any frame, and reproduction can be performed without causing sound skipping.

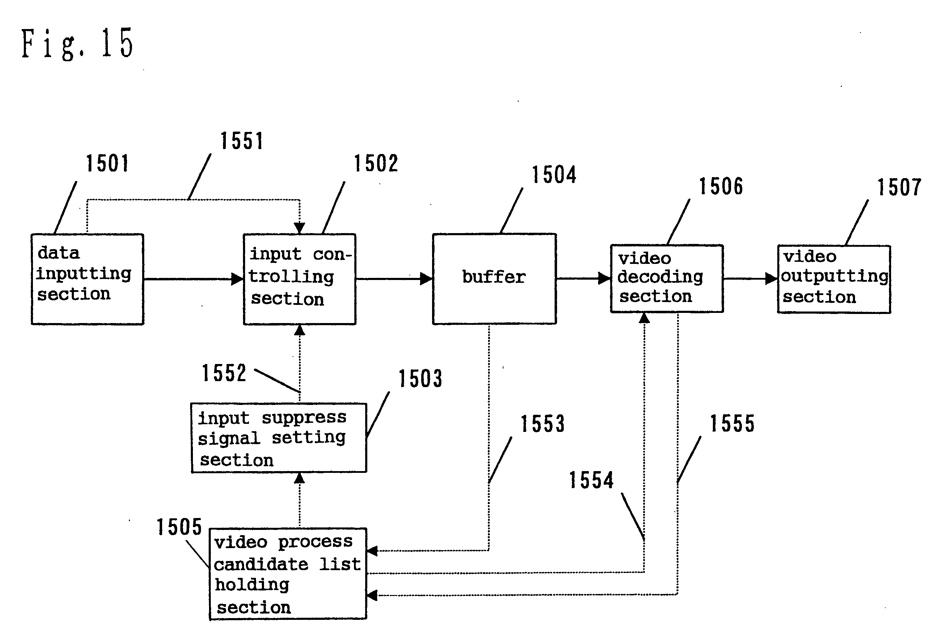

Fig. 15 is a block diagram illustrating a tenth embodiment of the invention. In Fig. 15, 1501 denotes a data inputting section, 1502 denotes an input controlling section, 1503 denotes an input suppress signal setting section, 1504 denotes a buffer, 1505 denotes a video process candidate list holding section, 1506 denotes a video decoding section, 1507 denotes a video outputting section, 1551 denotes an input candidate frame number, 1552 denotes an input suppress signal, 1553 denotes an input end signal, 1554 denotes a video process frame number, and 1555 denotes a decoding end signal. In the embodiment, the decoding unit is a frame, and the decoding unit number is the frame number.

Next, the operation of the embodiment will be described.

A coded video data which is input into the data inputting section 1501 is supplied to the input controlling section 1502 while the frame number is set as the input candidate frame number 1551. If the input suppress signal 1552 supplied from the input suppress signal setting section 1503 is OFF, the input controlling section inputs the coded video data of the input candidate frame into the buffer 1503.

When the input of the coded video data is completed, the input end signal 1553 is supplied to the video process candidate list holding section 1504. The video process candidate list holding section 1504 controls the input suppress signal setting section 1503 in accordance with a video process candidate list held therein.

The video decoding section 1506 receives a supply of a video process frame 1554 from the video process candidate list holding section 1505, decodes the corresponding frame, and supplies the decoded data to the video outputting section 1507. When the video decoding is ended, the decoding end signal 1555 is supplied to the video process candidate list holding section 1505.

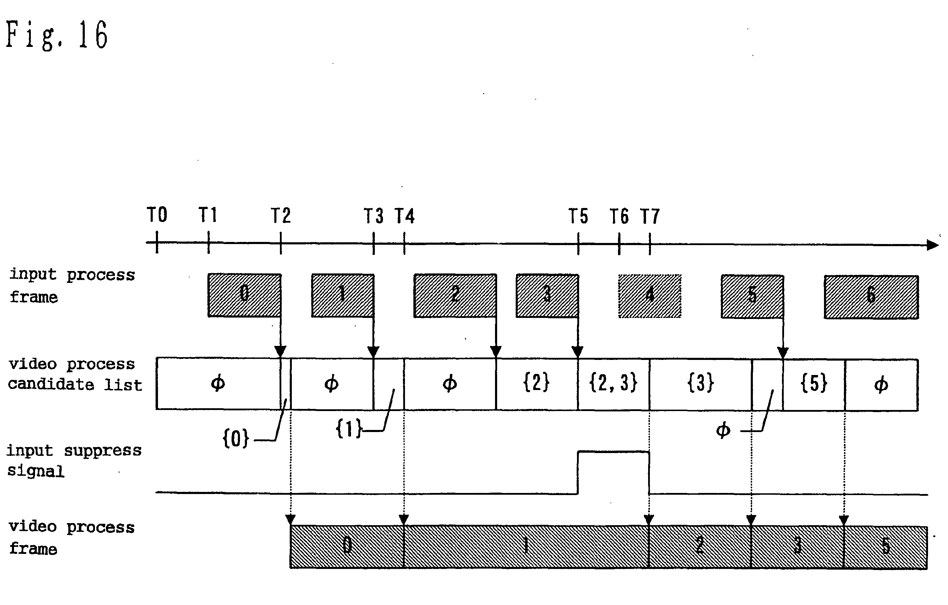

Fig. 16 is a time chart illustrating operations of the input candidate frame number, the video process candidate list, the input suppress signal, and the video process frame in the embodiment.

It is assumed that, before the start of the process, the video process candidate list is a null set (φ) and the input suppress signal is OFF.

When a coded video data of a 0-th frame is input into the inputting section at time T0, the input candidate frame number "0" is obtained. Since the input suppress signal is OFF, the input controlling section starts the writing into the buffer at time T1, and the frame number of the next frame is set as the input candidate frame number.

When the input is completed at time T2, the input process frame number "0" the input of which has been completed is added to the video process candidate list. However, the top element of the video process candidate list, i.e., "0" is immediately set as the video process frame and removed from the video process candidate list, and the video decoding process is started.

When the input of a first frame into the buffer is completed at time T3, "1" is added to the video process candidate list. Since the video decoding is being processed, however, the video process candidate list becomes {1}.

The video decoding of the 0-th frame is ended at time T4. Therefore, "1" is removed from the video process candidate list and the list becomes φ.

When the input of a third frame is completed at time T5, the immediately previous video process candidate list is {2}, and hence 3 is added to the rear so that the list is {2, 3}. At this time, the element number of the video process candidate list becomes 2, and the input suppress signal is therefore set to ON.

At time T6, the input candidate frame number is "4." At this time, the input suppress signal is ON, and hence the input of a fourth frame is not performed.

When the decoding of the first frame is ended at time T7, the decoding process of the second frame corresponding to "2" which is the top element of the video process candidate list is started, and "2" is removed from the video process candidate list.
At the same time, since the video process candidate list from which "2" has been removed is {3} and the element number is 1, the input suppress signal is therefore set to OFF.

As described above, according to the embodiment, when the video decoding process time period is relatively longer than the input time period, the input into the buffer is suppressed according to the time difference between the inputting process and the decoding process, thereby allowing the CPU to allocate more resources to the video decoding. As a result, the video reproduction rate can be improved.

The decoding method of the invention can be realized as a decoding device, and also as a program which operates in a PC. This program can be recorded on a recording medium such as a magnetic disk, and can be easily ported to another PC. Furthermore, the program can be moved to another computer via a network.

### Industrial Applicability

As described above, according to the invention, when a coded video or a coded audio is to be decoded by software by using a PC, the data input, the audio decoding, and the video decoding can be decoded more efficiently, with the result that all audio data can be reproduced in real time and the video reproduction rate can be improved.

When the architecture (the performance of a CPU, the rate of a bus, the form of the bus, and the like) of the executing PC is not lower in performance than that which is mainly used at present, the invention is effective, and its practice attains excellent effects.

The coded audio signal in the invention includes a signal which is obtained by sampling an audio signal and simply rearranging the samples, and also a signal which is obtained by sampling an audio signal and further subjecting the samples to high efficiency coding.
The decoding method of the invention can be realized also as a program which operates on a PC. This program can be recorded on a recording medium such as a magnetic disk, and can be easily ported to another PC. Furthermore, the program can be moved to another computer via a network.

## Claims

1. A decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is later than the decoding target time, priority setting means sets a priority of said video decoding means to be lower, or a priority of said audio decoding means to be higher.

2. A decoding method for reproducing by decoding a coded audio signal every each decoding unit which is obtained by dividing said coded audio signal in a direction of a time axis in audio decoding means, and by decoding a coded video signal in video decoding means, wherein
a decoding target time for each of the decoding units is determined,
a reference time of a decoding process for each of the decoding units is output,
in the decoding unit, the reference time is compared with the decoding target time corresponding to the reference time, and, if the reference time is earlier than the decoding target time, priority setting means sets a priority of said video decoding means to be higher, or a priority of said audio decoding means to be lower, and, if the reference time is later than the decoding target time, said priority setting means sets the priority of said video decoding means to be made lower, or the priority of said audio decoding means to be higher.

3. A decoding method according to claim 1 or 2, **characterized in that** the reference time is a start time or an end time of a decoding of the decoding unit.

4. A decoding method according to any one of claims 1 to 3, **characterized in that** the decoding unit is one frame of a video signal.

5. A method for reproducing by decoding a coded video data in a decoding unit, **characterized in that**
in the case where the coded video data in the decoding unit is input, the coded video data is held in the decoding unit by an n number of buffers (n is a natural number), a coded video data is selected from said buffers, and a decoding is performed by a video processing section,
when an input, a selection, and a decoding are performed on the buffers while using: an input process number indicating into which one of said buffers a coded video data is to be input; a video process number indicating from which one of said buffers a coded video data that is being decoded is selected; and a video process candidate number indicating a buffer which stores a coded video data that is to be selected after the video process is ended,
the coded video data in the decoding unit is input by input controlling means into a buffer corresponding to the input process number,
when the video process is ended, the video process candidate number at the ending timing is set to a next video process number, and a coded video data of a buffer corresponding to the video process candidate number is decoded, and
when an input in the decoding unit into said buffer is ended, an input process number corresponding to a buffer in which the input has been just ended is set to the video process candidate number, and a number other than the video process candidate number to which the input process number has been just set, and other than the video process number at the ending timing is set as the new input process number.

6. A decoding method for reproducing by decoding a coded audio data and a coded video data in a decoding unit, **characterized in that**
in the case where a multiplexed data in which the coded video data in the decoding unit and the coded audio data in the decoding unit are multiplexed is input, the multiplexed data is held in the decoding unit by an n number of buffers (n is a natural number), a coded video data and a coded audio data are selected from said buffers, and a decoding is performed by a video processing section and an audio processing section,
when an input, a selection, and a decoding are performed on the buffers while using: an input process number indicating into which one of said buffers a coded video data and a coded audio data are to be input; a video process number indicating from which one of said buffers a coded video data that is being decoded is selected; and a video process candidate number indicating a buffer which stores a coded video data that is to be selected after the video process is ended,
the multiplexed data in the decoding unit is input by input controlling means into a buffer corresponding to the input process number,
after the input of the multiplexed data into said buffer is ended, the coded audio data is decoded by said audio processing section,
when a video process is ended, the video process candidate number at the ending timing is set to a next video process number, and a coded video data of a buffer corresponding to the video process candidate number is decoded, and
when the audio decoding process is ended, an input process number corresponding to a buffer in which the audio decoding process has been just ended is set to the video process candidate number, and a number other than the video process candidate number to which the input process number has been just set, and other than the video process number at the ending timing is set as the new input process number.

7. A decoding method for reproducing by decoding a coded audio data and a coded video data in a decoding unit, **characterized in that**
in the case where a multiplexed data in which the coded video data in the decoding unit and the coded audio data in the decoding unit are multiplexed is input, the multiplexed data is held in the decoding unit by an n number of buffers (n is a natural number), a coded video data and a coded audio data are selected from said buffers, and a decoding is performed by a video processing section and an audio processing section,
when an input, a selection, and a decoding are performed on the buffers while using: an input process number indicating into which one of said buffers a coded video data and a coded audio data are to be input; a video process number indicating from which one of said buffers a coded video data that is being decoded is selected; an audio process number indicating from which one of said buffers a coded audio data that is being decoded is selected; and a video process candidate number indicating a buffer which stores a coded video data that is to be selected after the video process is ended,
the multiplexed data in the decoding unit is input by input controlling means into a buffer corresponding to the input process number,
after the input of the multiplexed data into said buffer is ended, the coded audio data is decoded by said audio processing section,
when a video process is ended, the video process candidate number at the ending timing is set to a next video process number, and a coded video data of a buffer corresponding to the video process candidate number is decoded, and
when an input in the decoding unit to said buffer is ended, an input process number corresponding to a buffer in which the input has been just ended is set to the audio process number and the video process candidate number, and (1) a number other than the audio process number to which the input process number has been just set, and other than the video process number at the input ending timing, or (2) a number other than the video process candidate number to which the input process number has been just set, and other than the video process number at the input process timing is set as the new input process number.

8. A decoding method according to claim 7, **characterized in that** the multiplexed data to be input into said buffer is input in accordance with a predetermined reference signal.

9. A decoding method for reproducing by decoding a coded audio data in an audio decoding unit, wherein
in the case where the coded audio data in the audio decoding unit is held by an m number of buffers (m is a natural number), the coded audio data is selected from said buffers, and a decoding is performed by an audio processing section,
when an input, a selection, and a decoding are performed on the buffers while using: an input process number indicating into which one of said buffers a coded audio data is to be input; and an audio process number indicating from which one of said buffers a coded audio data that is being decoded is selected,
when an audio reference signal which is produced at time intervals corresponding to the audio decoding unit is produced, an audio buffer corresponding to the audio input number is caused to start an input of the coded audio data,
the coded audio data is selected from an audio buffer of the audio process number, the coded audio data is decoded by said audio processing section,
when a coded audio input in the decoding unit is ended, an audio input number corresponding to a buffer in which the input has been just ended is set to the audio process number by process number updating means, and in place a number other than the audio process number to which the audio input number has been just set is set as the new audio input number.

10. A decoding method for input and reproducing by decoding a coded data in a decoding unit, wherein
in the case where the coded data in the decoding unit is held by an m number of buffers (m is a natural number) , the coded data is selected from said buffers, and a decoding is performed by a processing section,
when an input of a coded data into said buffers is ended, numbers of buffers in which the input is ended are accumulated into a process candidate list, when a coded data is selected for decoding from a predetermined buffer, a number of the selected buffer is deleted from the process candidate list,
when a process of a coded data is ended, among buffer numbers accumulated in the process candidate list, a buffer number an accumulation time of which is earliest is selected, and a decoding is performed by a processing section, and
when the coded data is to be input, a number of buffer numbers which are accumulated in the process candidate list is checked, and, if the number reaches a predetermined number a which is not larger than the number m of said buffers, the coded data is not input, and, if only buffer numbers a number of which is smaller than a are accumulated, the coded data is input.

11. A decoding method according to of claim 5, 6, 7, or 8, **characterized in that** the decoding unit is one frame of a video.

12. A decoding method according to of claim 5, 6, 7, or 8, **characterized in that** n is a natural number which is equal to or larger than 3.

13. A decoding method according to of claim 9, **characterized in that** m is a natural number which is equal to or larger than 2.

14. A decoding method according to of claim 10, **characterized in that** the coded data is a coded video data, and the decoding unit is one frame of a video.

15. A decoding method according to of claim 10, **characterized in that** a is a natural number which is equal to or larger than 2.

16. A program recording medium **characterized in that** a program for realizing all or a part of steps of the decoding method according to any one of claims 1 to 15 by a computer is stored in said medium.
